# EUROPEAN PATENT SPECIFICATION

(11) **EP 1 233 849 B1**
(45) Date of publication and mention of the grant of the patent: **06.10.2004**
(21) Application number: 00981274.4
(22) Date of filing: 18.11.2000
(51) Int. Cl.: B25H 1/00, B23D 51/02

(54) **MULTI-FUNCTIONAL WORKTABLE SYSTEM**
MULTIFUNKTIONELLES ARBEITSTISCHSYSTEM
SYSTEME MULTIFONCTIONS DE TABLE DE TRAVAIL

(30) Priority: 19.11.1999 GB 9927480; 02.02.2000 GB 0002394; 10.05.2000 GB 0011222
(43) Date of publication of application: 28.08.2002
(73) Proprietor: Kent, Frank Michael John, London SW15 2NL (GB)
(72) Inventor: Kent, Frank Michael John, London SW15 2NL (GB)
(74) Representative: Eisenführ, Speiser & Partner
(86) International application number: PCT/EP2000/011499
(87) International publication number: WO 2001/036164

(56) References cited:
- GB-A- 2 287 207
- US-A- 4 350 066
- US-A- 4 487 403
- US-A- 5 052 454

## Description

The present invention relates to a worktable system comprising a supporting structure and fastening means supported by the supporting structure for fastening a workpiece.

Such a worktable system has multi-functional use in connection with building work and the like. Usually, such a worktable system is transportable and, therefore, appropriate for home working.

US 5 052 454 A discloses a portable routering apparatus for use with a hand-held router to rout figures, designs, alphanumeric characters and the like without the requirement of a template for each figure, design, or character, wherein the apparatus is adjustable to accommodate workpieces of variable width and thickness and unlimited length. The apparatus consisting of a base, an adjustable workpiece clamp, a router guide fence, a plurality of indexing scales, and a plurality of guide blocks, wherein a workpiece is positioned on the base and secured with the clamp, and the movement of a hand-held router thereon is guided by the guide fence and blocks and positioned using the indexing scales.

US 4 487 403 shows a bench mounted workpiece clamping straightedge to be used in conjunction with portable electric tools such as saws, routers and etc. or manual hand held cutting tools wherein a relatively vertically movable straightedge is utilized to clamp a workpiece firmly and presenting a straightedge with which to guide cutting tools across and or through said workpiece.

Known worktable systems provide for unconvenient handling of workpieces in conjunction with power tools.

Therefore, an object of the present invention is to provide a worktable system which allows a convenient handling of workpieces in conjunction with power tools for machining workpieces.

In order to achieve the above and other objects, in accordance with the present invention, there is provided a workable system comprising a supporting structure and fastening means supported by said supporting structure for fastening a workpiece, wherein said fastening means is adapted to provide directional guidance for movement of a tool, in particular a power tool, to machine the workpiece while it is fastened by said fastening means, and wherein said fastening means comprises at least one jaw, characterized in that said fastening means further comprises at least one movable clamping element provided beneath said at least one jaw and to be tightened up to the underside of said jaw for clamping the workpiece against the underside of said jaw.

Accordingly, in the worktable system of the present invention the fastening means simultaneously fasten a workpiece and provide direction guidance for a tool to machine the workpiece. wherein the at least one jaw defines the fixed part of a vertical clamping system in which the movable damping element defines a second movable part which is tightened up to the underside of the jaw.

Every kind of tool and in particular every kind of power tool like e.g. a saw or a drilling machine can be used.

Further, it should be noted that in the terms of this invention, the "supporting structure" would normaly comprise a top support with leg support structure, but it could also consist of a top frame only or have other constructions.

Preferably, the at least one jaw forms a rectangular plate; and the fastening means comprises at least two jaws wherein at least one of said jaws is movable in relation to another of said jaws, and wherein the jaws a arranged side by side in a common plane extending along a top section of the supporting structure.

Usually, at least one jaw is movable in a direction perpendicular to its length.

Preferably, stop means are provided for limiting the directional guidance.

Preferably, at least one edge of at least one jaw can be adapted to provide for movement of the tool. So, an edge of a jaw length may be used as a guide for a tool to machine a workpiece. For instance, the workpiece may be clamped to and protrude from the underside of a jaw. The tool may be guided by the outside edge of a jaw or the inside edge of a jaw. Alternatively, the two inside edges of two jaws may be used when such jaws are set at a parallel width to suite the tool.

A guidance means for movement of the tool may be provided wherein the guidance means operatively cooperate with the fastening means.

In a further preferred embodiment wherein the fastening means comprise at least one groove, the guidance means may comprise at least one slider slidably received in the at least one groove. Alternatively, the guidance means may operatively cooperate with at least one edge of at least one jaw.

In case a tool support means for supporting the tool is provided, the fastening means may be adapted to provide guidance for movement of the tool support means, or the guidance means may be provided for movement of the tool support means.

In a still further preferred embodiment, the support means comprise a sliding mount for carrying the tool, the sliding mount being moveable at an angle, preferably at a right angle, with relation to the direction of the guidance provided by the fastening means. Stop means may be provided for limited the movement path of the sliding mount.

Preferably, the support means can comprise a plate for mounting a tool, said plate having at least one edge to operatively cooperate with at least one edge of at least one jaw. The plate may be adapted to be slidably held between two jaws. In this case the two inside edges of two jaws can be used as guidance when such jaws are set at a parallel width to suite the plate. Usually, the tool is mounted upon the plate.

Alignments means for aligning the workpiece in relation to the fastening means can be provided wherein the fastening means comprise jaws. In such embodiment, the alignment means may preferably be adapted so as to align the workpiece in line essentially perpendicular to the jaw length. So, for instance, a workpiece which may be clamped to the underside of a jaw may be aligned in a line perpendicular to the jaw length such that the tool using the edge of a jaw as a guide may machine the workpiece at a true right angle.

Moreover, support and alignment means may be provided between the jaws for supporting and aligning a workpiece at a point or points along the machining line of the tool. In this embodiment, the support and alignment means may preferably by adjustable from side to side and/or in vertical direction to suite the width of different tools and/or the depth of different thicknesses of workpieces.

Further, blade guiding means may be situated beneath the workpiece for guiding a blade of a jig saw to achieve a straight vertical cut.

Holding means may be attached to the fastening means for holding the workpiece at an adjustable height below, at the level of and/or above the fastening means. In case of the provision of jaws, the holding means may be attached to each of the jaws and hold a workpiece at an adjustable height below, between and above the surface of the jaws permitting as necessary the workpiece to slide between the holding means and/or to be held in a tightly clamped fixed position.

Of course, the fastening means may also be adapted so as to allow the workpiece to be moved in relation to the fastening means. In this embodiment, stops may further be provided for limiting the movement parth of the workpiece.

The above and other objects and features of the present invention will become clear from the following description taken in conjunction with preferred embodiments with reference to the accomping drawings in which:
- Fig. 1: is a schematic side view of a worktable;
- Fig. 2: is a partial schematic plan view of a first preferred embodiment of a worktop section of a worktable;
- Fig. 3: is a partial schematic side view of a second preferred embodiment of a worktop section of a worktable;
- Fig. 4: is a partial schematic plan view of a second preferred embodiment of a worktop section of a worktable;
- Fig. 5: is a schematic side view of the distal end of the sliding table and the sliding mount of the second embodiment;
- Fig. 6: is a schematic side view of the distal end of the sliding table showing its cross section shape in better detail of the second embodiment;
- Fig. 7: a schematic enlarged view of a stop provided at a portion of the sliding table of the second embodiment;
- Fig. 8: is a partial schematic side view of a workpiece clamped at an adjustable level by means of workpiece supports;
- Fig. 9: is a partial schematic top view of a workpiece support;
- Fig. 10: is a schematic partical side view of another machining operation wherein the workpiece is fastened between an angle and a workpiece support;
- Fig. 11: is a schematic partial side view of another machining operation wherein the workpiece is clamped against the underside of the jaws;
- Fig. 12: is a schematic plan view of a further preferred embodiment of the worktop section of a worktable;
- Fig. 13: is a schematic partial side view of the embodiment of Fig. 12; and
- Fig. 14: is still another schematic partial side view of the embodiment of Fig. 12.

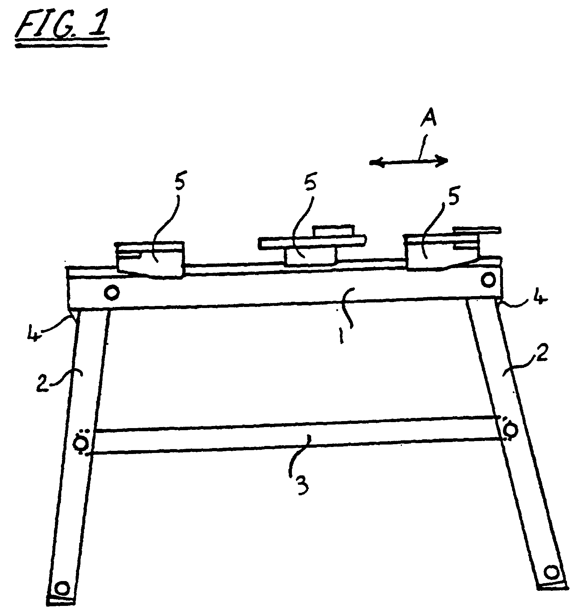

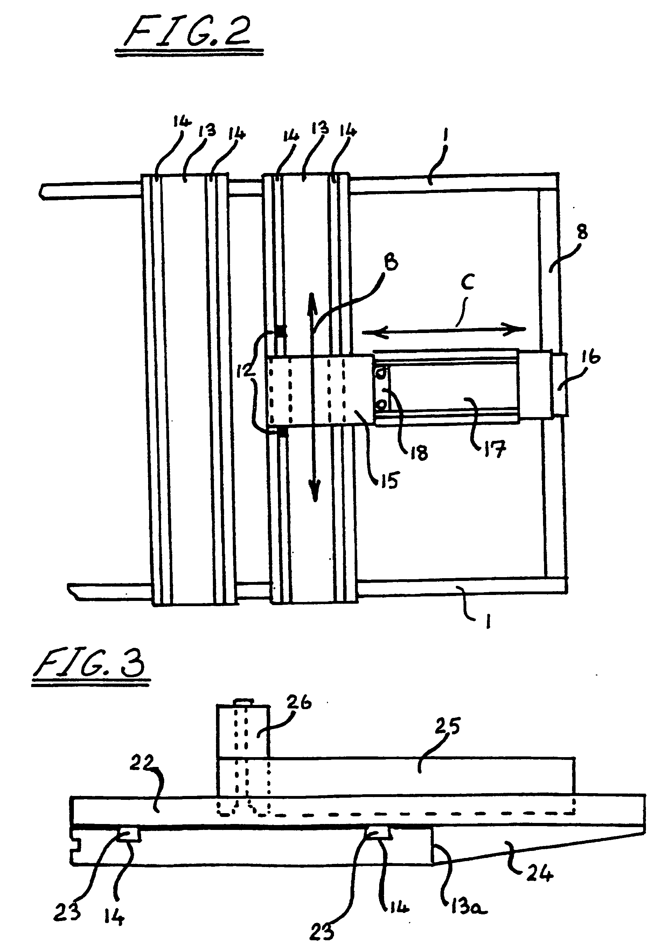

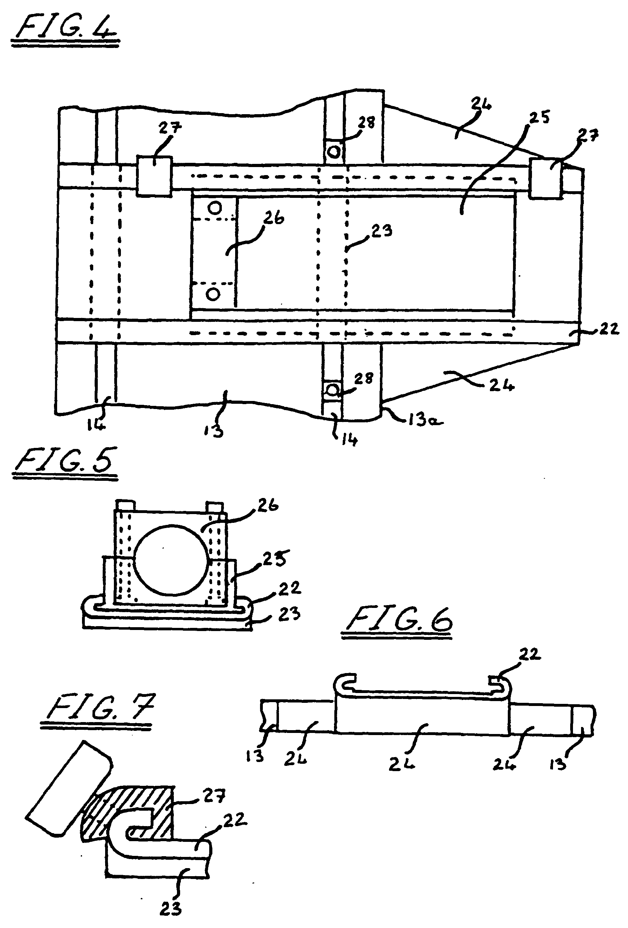

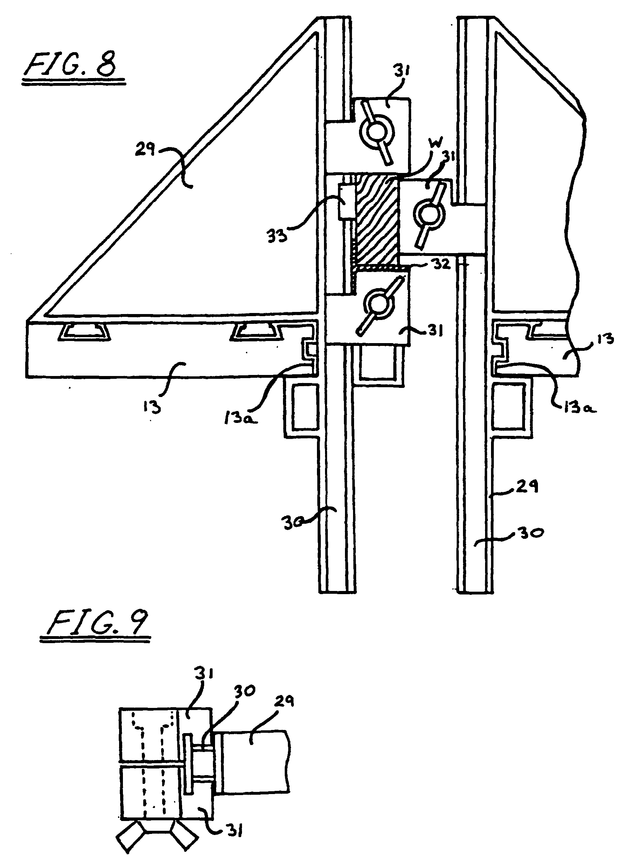

In Fig. 1 it is shown a preferred embodiment of a worktable comprising a top frame 1 with inward folding leg supports 2 braced apart by removable struts 3 against blocking elements 4 and two or more work top sections 5 arranged in selected positions on the top frame 1, two of which are provided with jaws defining a fastening means having clamping function for fastening a workpiece. The jaws 13 which are shown in figure 2 each form a rectangular plate essentially extending over the whole width of the top frame 1, wherein at least one of the jaws 13 is movable in a direction perpendicular to its length as indicated by arrow A in Fig. 1 and by arrow C in figure 2.

The worktable shown in Fig. 1 has a foldable construction for better stowing and transportation purposes. One suitable form of construction for the worktable is that it is employed in ladder fabrication so that hollow section top frame and leg support lengths joined by hollow section cross-members may provide lightness and rigidity.

Fig. 2 is a schematic top view of a first preferred embodiment of the top frame 1 comprising a top frame cross-piece 8 forming one side and of the top frame 1. Shown in Fig. 2 are two jaws 13 which, as already mentioned above, each form a rectangular plate and are movable in a direction perpendicular to their length. Each jaw 13 includes a pair of grooves 14 spaced from each other and extending along the length of the jaws 13 adjacent to their edges, respectively. The grooves 14A are open to the top as seen in Fig. 2.

A sliding table 15 is in sliding engagement with the grooves 14 of one of the jaws 13 (i.e. the right-hand jaw 13 in Fig. 2) so as to slide in the line of arrow B in the direction of the length of the jaws 13 and, thus, of the width of the top frame 1. In order to limit the movement of the sliding table 15 along the grooves 14, there are provided stops 12 fitted in at least one of the grooves 14. Whereas the sliding table 15 is in sliding engagement with the grooves 14 and, thus, supported by the jaw 13 at its one end, the sliding table 15 is provided at its distal other end with a sliding mount 16 which supports the distal end of the sliding table 15 on the top frame cross-piece 8 in a sliding manner.

Further, the sliding table 15 comprises a sliding mount 17 which is movable perpendicular to the movement path of the sliding table 15 as indicated by arrow C. In order to limit the movement path of the sliding mount 17 along the sliding table 15, stops can be provided which are not shown in Fig. 2. Positioned on the sliding mount 17 is a mounting structure 18, e.g. a clamp, to hold a power tool, e.g. a drilling machine, (not shown) for machining a workpiece (not shown in Fig. 2) which is fastened by the jaws 13.

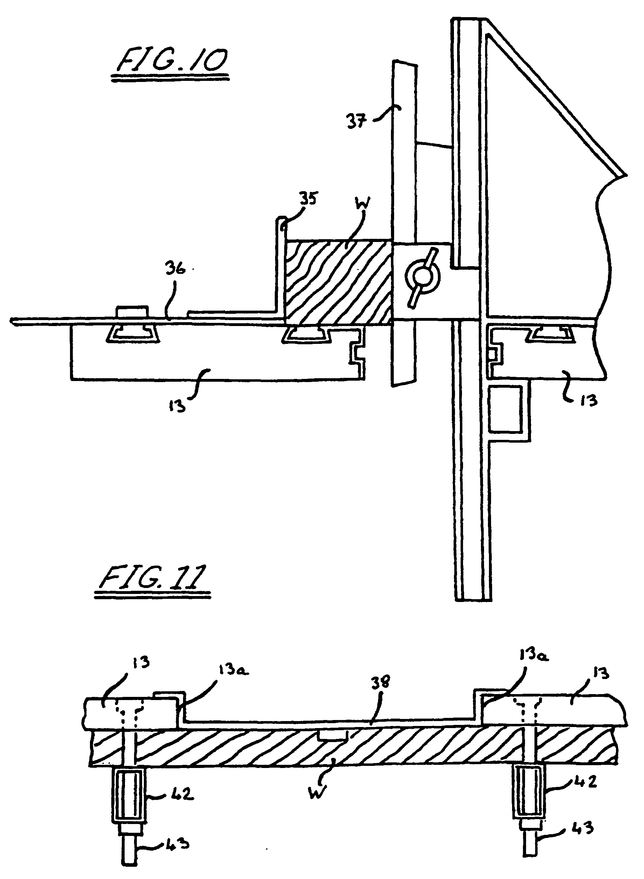

A preferred second embodiment of the top frame structure is shown in Fig. 3 to 7.

Like in the first embodiment, the second embodiment also comprises a sliding table 22 which operates along the length of the jaw 13 by means of runners 23 which are mounted at the underside of the sliding table 22 and inserted into the grooves 14 of the jaw 13. At its distal end the sliding table 22 is provided with a rear guide 24 which forms a step and is in contact with one edge 13a (the right-hand edge according to the Fig. 3 and 4) of the jaw 13 so as to run along such edge.

Like in the first embodiment, the second embodiment also comprises a sliding mount 25 which is movable in a direction perpendicular to the length of the jaw 13 and, thus, perpendicular to the movement path of the sliding table 22 so as to operate along the length of the sliding table 22.

Further, like in the first embodiment, a mounting structure 26 is arranged on the sliding mount 25 to fasten a power tool (not shown) for machining a workpiece (not shown). In the second embodiment, the mounting structure 26 is provided for holding a drilling machine and comprises two halves to be tightened together by screws and a circular opening defined by both halves to firmly clamp a portion of a drilling machine. Additional support means (not shown) could be provided for holding the power tool.

Adjustable stops 27 are provided on the sliding table 22 to limit the movement of the sliding mount 25 along it. A detailed view of such a stop 27 is shown in Fig. 7.

Moreover, like in the first embodiment, stops 28 are also provided in at least one groove 14 of the jaw 13 to limit the movement of the sliding table 22 along the length of the jaw 13.

Fig. 8 is a side view of a workpiece W clamped at an adjustable level by means of workpiece supports 29 which are attached to jaws 13. Each workpiece support 29 comprises a vertical track 30 and is mounted on the jaw 13 so that a portion of the rear side of the track 30 is in contact with the inner edge 13a of the jaw 13 facing the other jaw 13. The tracks 30 of the workpiece supports 29 are provided for attaching height adjusters 31 for determining the height of the workpiece W. The height adjusters 31 of at least two different workpiece supports 29 hold a T-shaped bar 32 wherein such height adjusters 31 must be inline. Along the T-shaped bar 32 the workpiece W may be slid or held firmly dependent upon the tightening of the jaws 13. The workpiece supports 29 further comprise a slide 33 which takes up the thickness of the T-shaped bar 32.

Fig. 9 is a top view of a workpiece support 29 and the height adjuster 31 which is to be tightened into position by means of nut and bolt.

The workpiece supports 29 as shown in Fig. 8 and 9 can be used in conjunction with the first embodiment of Fig. 2 as well as with the second embodiment of Fig. 3 to 7, wherein the workpiece W is machined by a tool, in particular a power tool, supported on the top frame 1 as described above.

Fig. 10 is a side view of another machining operation in which the workpiece W may slide along jaw 13 between an angle 35 mounted on the jaw 13 by means of a mounting base 36 which for instance is engaged with the groove 14 of the jaw 13 (as shown in Fig. 10). On the adjacent jaw 13 is fastend a workpiece support 29 as shown in the Fig. 8 and 9. The situation shown in Fig. 10 is advantageous for using a sanding tool or a drilling machine having a sander instead of a drill bit. So, the height adjuster 31 of the workpiece support(s) 29 is provided such that the sander indicated by the reference numeral 37 in Fig. 10 touches the workpiece W. Slight tightening of the jaws 13 may gradually bring the workpiece W toward the sander 37.

The situation of Fig. 10 can be used with a first embodiment of Fig. 2 as well as with a second embodiment of Fig. 3 to 7, too.

Fig. 11 is a side view of a suspended system of damping on the jaws 13 where bars 42 running along the length of the jaws 13 are suspended underneath the jaws 13 by means of long bolts 43 such that a workpiece W is damped between the underside of the jaws 13 and the top side of the clamping bars 42. A plate 38 to which a router (not shown) may be attached is guided across the workpiece W to machine a cross channel. The plate 38 is held and guided between the inner edges 13a of the jaws 13 as shown in Fig. 11. A jig saw may be attached to the plate 38.

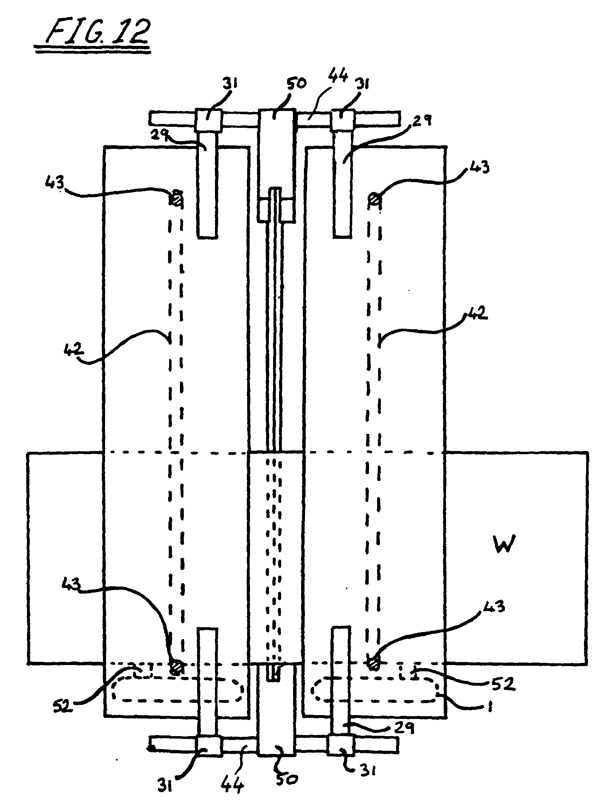

Fig. 12 shows a plan view of a further preferred embodiment of the worktop section of a worktable setup for jig saw cross-cut which table is provided with clamping bars 42 as already described above and shown in Fig. 11. So, in this embodiment, the workpiece W is clamped beneath the jaws 13 between the underside of the jaws 13 and the clamping bars 42. The jaws 13 are set at parallel spaced positions so as to suite a jig saw (not shown) therebetween which is guided along their inner edges 13a.

Further, a workpiece support 29 of the type as already shown in the Fig. 8 and 9 is mounted at each face end of each jaw 13. So that four workpiece supports 29 are provided in the embodiment of Fig. 12. Whereas the workpiece supports 29 extend perpendicular to the length of the jaws 13 in the situations as shown in the Fig. 8 and 10, the workpiece supports 29 extend in the direction of the length of the jaws 13 in the situation of Fig. 12.

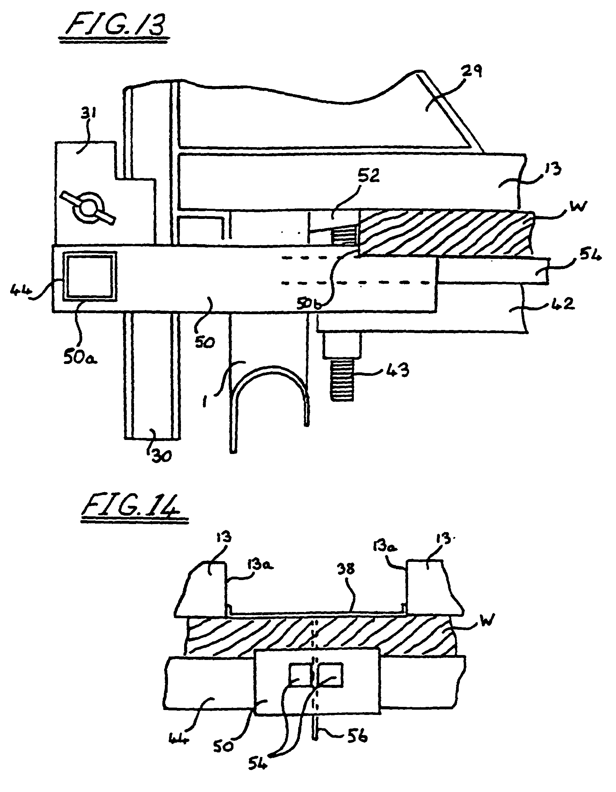

Each pair of workpiece supports 29 positioned at the same face end of the jaws 13 is connected by a so-called saw end plate bar 44 which runs through a rectangular opening of a square 46 arranged at the underside of the heigth adjusters 31 (cf. Fig. 8). The saw end plate bar 44 also runs through a further rectangular opening 50a formed in an end portion of a saw end plate 50 as shown in figure 13.

The saw end plate 50 and the surrounding arrangement is depicted in better detail in Fig. 13 showing a side view of the embodiment of Fig. 12. As shown in Fig. 13, the cross section of the saw end plate bar 44 essentially corresponds to that of the opening 50a in the saw end plate 50; this applies to the opening of the square 46 of the heigth adjusters 31 (cf. Fig. 8), too.

At its inner end portion facing into the space between both jaws 13, both the saw end plates 50 each are provided with a vertical recess which extends in the direction of the length of the space between the jaws 13 and, thus, in the direction of the movement of the blade of the jig saw (not shown) and is open to the space between the jaws 13. Further, the saw end plate 50 comprises at its inner end portion a vertical step 50b which extends perpendicular to the length of the jaws 13 as shown in Fig. 13.

Beneath the jaws 13, alignment elements 52 are provided which are mounted to the top frame 1 (a part of the top frame is shown in dotted lines in Fig. 12 and in solid lines in Fig. 13). The alignment elements 52 and the vertical step 50b of the saw end plate 50 cooperate with each other so as to align the workpiece W in a line perpendicular to the length of the jaws 13 such that the jig saw (not shown) can machine the workpiece W at a true right angle up to its very end.

Fig. 14 regards the same situation as Fig. 12 and 13 and shows an end view of the two jaws 13 whose inner edges 13a are provided for guiding the jig saw (not shown) therebetween. The view of Fig. 14 is similar to that of Fig. 11 in so far as the plate 38 is provided. Additionally, two plate guides 54 are positioned beneath the workpiece W (cf. also Fig. 13). The blade guides 54 each are provided as a rod and are spaced from each other so that therebetween a gap is defined for receiving and guiding the blade 56 of a jig saw (not shown) which is mounted on the plate 38.

## Claims

1. A workable system comprising a supporting structure (1, 8) and fastening means supported by said supporting structure (1, 8) for fastening a workpiece (W), wherein
said fastening means is adapted to provide directional guidance for movement of a tool, in particular a power tool, to machine the workpiece (W) while it is fastened by said fastening means, and
wherein said fastening means comprises at least one jaw (13),
**characterized in that** said fastening means further comprises at least one movable clamping element (42) provided beneath said at least one jaw (13) and to be tightened up to the underside of said jaw (13) for clamping the workpiece (W) against the underside of said jaw (13).

2. A worktable system according to claim 1,
wherein said at least one jaw (13) forms a rectangular plate.

3. A worktable system according to claim 1 or 2,
wherein said fastening means comprises at least two jaws (13), wherein at least one of said jaws (13) is movable in relation to another of said jaws (13).

4. A worktable system according to claim 2 and 3,
wherein said jaws (13) are arranged side by side in a common plane extending along a top section of said supporting structure (1, 8).

5. A worktable system according to claim 3 or 4,
wherein at least one jaw (13) is movable in a direction perpendicular to its length.

6. A worktable system according to at least any one of the preceding claims,
**characterized by** stop means (12; 28) for limiting the directional guidance.

7. A worktable system according to at least any one of the preceding claims,
**characterized in that** at least one edge (13a) of at least one jaw (13) is adapted to provide guidance for movement of the tool.

8. A worktable system according to at least any one of the preceding claims,
**characterized by** guidance means (38) for movement of the tool wherein said guidance means (38) operatively cooperate with said fastening means (13).

9. A worktable system according to claim 8,
wherein said fastening means comprise at least one groove (14),
**characterized in that** said guidance means comprises at least one slider (15; 22) slidably received in said at least one groove (14).

10. A worktable system according to claims 7 and 8,
**characterized in that** said guidance means operatively cooperate with at least one edge (13a) of at least one jaw (13).

11. A worktable system according to at least any one of the preceding claims, further comprising tool support means (15; 22) for supporting the tool,
**characterized in that** said fastening means are adapted to provide guidance for movement of said tool support means (15; 22).

12. A worktable system according to claim 11,
**characterized in that** said support means (15; 22) comprise a sliding mount (17; 25) for carrying the tool, said sliding mount being moveable at an angle, preferably at a right angle, with relation to the direction of the guidance provide by said fastening means.

13. A worktable system according to claim 12,
**characterized by** stop means (27) for limiting the movement path of the sliding mount (25).

14. A worktable system according to claim 7 as well as claim 11,
**characterized in that** said support means comprise a plate (38) for mounting a tool, said plate having at least one edge to operatively cooperate with at least one edge (13a) of at least one jaw (13).

15. A worktable system according to claim 14,
**characterized in that** said plate (38) is adapted to be slidably held between two jaws (13).

16. A worktable system according to at least any one of the preceding claims, further comprising alignment means (50; 52) for aligning the workpiece (W) in relation to said fastening means,
**characterized in that** said alignment means (50, 52) are adapted so as to align the workpiece in a line essentially perpendicular to the jaw length.

17. A worktable system according to at least any one of the preceding claims,
wherein said fastening means comprise at least two jaws (13),
**characterized by** support and alignment means (50) provided between the jaws (13) for supporting and aligning a workpiece (W) at a point or points along the machining line of the tool.

18. A worktable system according to claim 17,
**characterized in that** said support and alignment means (50) are adjustable from side to side and/or in vertical direction.

19. A worktable system according to at least any one of the preceding claims,
**characterized by** blade guiding means (54) to be situated beneath the workpiece (W) for guiding a blade (56) of a jig saw.

20. A worktable system according to at least any one of the preceding claims,
**characterized by** holding means (29) to be attached to said fastening means for holding the workpiece (W) at an adjustable height.

21. A worktable system according to at least any one of the preceding claims,
**characterized in that** said fastening means are adapted so as to allow the workpiece to be moved in relation to said fastening means.

22. A worktable system according to claim 21,
**characterized by** stops for limiting the movement path of the workpiece.

23. A worktable system according to at least any one of the preceding claims, **characterized in** a device for supporting a tool, in particular a power tool comprising a sliding base for slidably engaging with said fastening means (13) so as to achieve a directional movement with relation to the worktable system.

24. A worktable system according to claim 23, said device further comprising a sliding mount for carrying the tool, said sliding mount being moveable at an angle, preferably at a right angle, with relation to the direction of the movement of the sliding base.

25. A worktable system according to claim 24, said device further comprising stop means for limiting the movement path of the sliding mount.

## Patentansprüche

1. Arbeitstischsystem mit einer Stützstruktur (1, 8) und einer von der Stützstruktur (1, 8) gestützten Befestigungseinrichtung zur Befestigung eines Werkstückes (W), bei weichem
die Befestigungseinrichtung ausgebildet ist, eine Richtungsführung zur Bewegung eines Werkzeuges, insbesondere einer Werkzeugmaschine, vorzusehen, um das Werkstück (W) zu bearbeiten, während es durch die Befestigungseinrichtung befestigt ist, und
bei welchem die Befestigungseinrichtung mindestens eine Backe (13) aufweist,
**dadurch gekennzeichnet, dass** die Befestigungseinrichtung außerdem mindestens ein bewegliches Klemmelement (42) aufweist, das unterhalb der mindestens einen Backe (13) vorgesehen und zum Klemmen des Werkstückes (W) gegen die Unterseite der Backe (13) nach oben gegen die Unterseite der Backe (13) zu spannen ist.

2. Arbeitstischsystem nach Anspruch 1,
bei welchem die mindestens eine Backe (13) eine rechteckige Platte bildet.

3. Arbeitstischsystem nach Anspruch 1 oder 2,
bei weichem die Befestigungseinrichtung mindestens zwei Backen (13) aufweist, wobei mindestens eine der Backen (13) gegenüber der anderen der Backen (13) bewegbar ist.

4. Arbeitstischsystem nach Anspruch 2 und 3,
bei welchem die Backen (13) nebeneinander in einer gemeinsamen Ebene angeordnet sind, die sich entlang eines oberen Abschnittes der Stützstruktur (1, 8) erstreckt.

5. Arbeitstischsystem nach Anspruch 3 oder 4,
bei welchem mindestens eine Backe (13) in einer Richtung rechtwinklig zu ihrer Länge bewegbar ist.

6. Arbeitstischsystem nach mindestens einem der vorangegangenen Ansprüche,
**gekennzeichnet durch** Anschlagmittel (12; 28) zur Begrenzung der Richtungsführung.

7. Arbeitstischsystem nach mindestens einem der vorangegangenen Ansprüche,
**dadurch gekennzeichnet, dass** mindestens ein Rand (13a) mindestens einer Backe (13) ausgebildet ist, um eine Führung für die Bewegung des Werkzeuges zu bilden.

8. Arbeitstischsystem nach mindestens einem der vorangegangenen Ansprüche,
**gekennzeichnet durch** eine Führungseinrichtung (38) zur Bewegung des Werkzeuges, wobei die Führungseinrichtung (38) mit der Befestigungseinrichtung (13) zusammenwirkt.

9. Arbeitstischsystem nach Anspruch 8,
bei welchem die Befestigungseinrichtung mindestens eine Nut (14) aufweist,
**dadurch gekennzeichnet**, das die Führungseinrichtung mindestens einen Schlitten (15; 22) aufweist, der in der mindestens einen Nut (14) verschiebbar aufgenommen ist.

10. Arbeitstischsystem nach den Ansprüchen 7 und 8,
**dadurch gekennzeichnet, dass** die Führungseinrichtung mit mindestens einem Rand (13a) mindestens einer Backe (13) zusammenwirkt.

11. Arbeitstischsystem nach mindestens einem der vorangegangen Ansprüche, ferner mit einer Werkzeughalterungseinrichtung (15; 22) zur Halterung des Werkzeuges, **dadurch gekennzeichnet, dass** die Befestigungseinrichtung ausgebildet ist, um eine Führung zur Bewegung der Werkzeughalterungseinrichtung (15; 22) zu bilden.

12. Arbeitstischsystem nach Anspruch 11,
**dadurch gekennzeichnet, dass** die Stützeinrichtung (15; 22) eine verschiebbare Halterung (17; 25) zum Tragen des Werkzeuges aufweist, wobei die verschiebbare Halterung in einem Winkel, vorzugsweise einem rechten Winkel, gegenüber der Richtung der von der Befestigungseinrichtung gebildeten Führung bewegbar ist.

13. Arbeitstischsystem nach Anspruch 12,
**gekennzeichnet durch** Anschlagmittel (27) zur Begrenzung des Bewegungsweges der verschiebbaren Halterung (25).

14. Arbeitstischsystem nach Anspruch 7 sowie nach Anspruch 11,
**dadurch gekennzeichnet, dass** die Stützeinrichtung eine Platte (38) zur Halterung eines Werkzeuges aufweist, wobei die Platte mit mindestens einem Rand (13a), mindestens einer Backe (13) zusammenwirkt.

15. Arbeitstischsystem nach Anspruch 14,
**dadurch gekennzeichnet, dass** die Platte (38) ausgebildet ist, um zwischen zwei Backen (13) verschiebbar gehalten zu werden.

16. Arbeitstischsystem nach mindestens einem der vorangegangenen Ansprüche,
ferner mit einer Ausrichteinrichtung (50; 52) zum Ausrichten des Werkstückes (W) gegenüber der Befestigungseinrichtung,
**dadurch gekennzeichnet, dass** die Ausrichteinrichtung (50, 52) ausgebildet ist, um das Werkstück in Linie im wesentlichen rechtwinklig zur Backenlänge auszurichten.

17. Arbeitstischsystem nach mindestens einem der vorangegangenen Ansprüche,
bei welchem die Befestigungseinrichtung mindestens zwei Backen (13) aufweist, **gekennzeichnet durch** eine zwischen den Backen (13) vorgesehene Halterungsund Ausrichteinrichtung (50) zur Halterung und Ausrichtung eines Werkstückes (W) an einem Punkt oder an Punkten entlang der Bearbeitungslinie des Werkzeuges.

18. Arbeitstischsystem nach Anspruch 17,
**dadurch gekennzeichnet, dass** die Halterungs- und Ausrichteinrichtung (50) in seitlicher und/oder vertikaler Richtung justierbar ist.

19. Arbeitstischsystem nach mindestens einem der vorangegangenen Ansprüche,
**gekennzeichnet durch** eine unterhalb des Werkstückes (W) anzuordnende Sägeblattführungseinrichtung (54) zur Führung eines Sägeblattes (56) einer Stichsäge.

20. Arbeitstischsystem nach mindestens einem der vorangegangenen Ansprüche,
**gekennzeichnet durch** an der Befestigungseinrichtung anzubringende Haltemittel (29) zum Halten des Werkstückes (W) auf einer einstellbaren Höhe.

21. Arbeitstischsystem nach mindestens einem der vorangegangenen Ansprüche,
**dadurch gekennzeichnet, dass** die Befestigungseinrichtung so ausgeführt ist, dass das Werkstück gegenüber der Befestigungseinrichtung bewegt werden kann.

22. Arbeitstischsystem nach Anspruch 21,
**gekennzeichnet durch** Anschläge zur Begrenzung des Bewegungsweges des Werkstückes.

23. Arbeitstischsystem nach mindestens einem der vorangegangenen Ansprüche,
**gekennzeichnet durch** eine Vorrichtung zur Halterung eines Werkzeuges, insbesondere einer Werkzeugmaschine, mit einem verschiebbaren Sockel für einen Schiebeeingriff mit der Befestigungseinrichtung (13), um eine Richtungsbewegung gegenüber dem Arbeitstischsystem zu erzielen.

24. Arbeitstischsystem nach Anspruch 23,
bei welchem die Vorrichtung außerdem eine verschiebbare Halterung zum Tragen des Werkzeuges aufweist, wobei die verschiebbare Halterung in einem Winkel, vorzugsweise einem rechten Winkel, gegenüber der Bewegungsrichtung des verschiebbaren Sockels bewegbar ist.

25. Arbeitstischsystem nach Anspruch 24,
wobei die Vorrichtung außerdem Anschlagmittel zur Begrenzung des Bewegungsweges der verschiebbaren Halterung aufweist.

## Revendications

1. Système de table de travail comprenant une structure de support (1, 8) et des moyens de fixation supportés par ladite structure de support (1,8) pour attacher une pièce à usiner (W), dans lequel:
ledit moyen de fixation est adapté pour réaliser le guidage directionnel du déplacement d'un outil, en particulier un outil électrique, pour usiner la pièce à usiner (W) pendant qu'elle est attachée par lesdits moyens de fixation, et
dans lequel ledit moyen de fixation comprend au moins une mâchoire (13),
**caractérisé en ce que** ledit moyen de fixation comprend en outre au moins un élément de serrage mobile (42) prévu en dessous de ladite au moins une mâchoire (13) et à accrocher sur le côté inférieur de ladite mâchoire (13) afin de serrer la pièce à usiner (W) contre la face inférieure de ladite mâchoire (13).

2. Système de table de travail selon la revendication 1, dans lequel ladite au moins une mâchoire (13) forme une plaque rectangulaire.

3. Système de table de travail selon la revendication 1 ou 2, dans lequel ledit moyen de fixation comprend au moins deux mâchoires (13), au moins une desdites mâchoires (13) étant mobile par rapport à une autre desdites mâchoires (13).

4. Système de table de travail selon la revendication 2 ou 3, dans lequel lesdites mâchoires (13) sont agencées côte à côte dans un plan commun s'étendant le long d'une section supérieure de ladite structure de support (1, 8).

5. Système de table de travail selon la revendication 3 ou 4, dans lequel ladite au moins une mâchoire (13) est mobile dans une direction perpendiculaire à sa longueur.

6. Système de table de travail selon au moins l'une quelconque des revendications précédentes, **caractérisé par** des moyens d'arrêt (12; 28) servant à limiter le guidage directionnel.

7. Système de table de travail selon au moins l'une quelconque des revendications précédentes, **caractérisé en ce qu'**au moins un bord (13a) d'au moins une mâchoire (13) est adapté pour réaliser le guidage du déplacement de l'outil.

8. Système de table de travail selon au moins l'une quelconque des revendications précédentes, **caractérisé par** des moyens de guidage (38) du déplacement de l'outil, lesdits moyens de guidage (38) coopérant d'une façon opérationnelle avec lesdits moyens de fixation (13).

9. Système de table de travail selon la revendication 8, dans lequel lesdits moyens de fixation comportent au moins une rainure (14), **caractérisé en ce que** lesdits moyens de guidage comprennent au moins une glissière (15; 22) logée d'une façon coulissante dans ladite au moins une rainure (14).

10. Système de table de travail selon les revendications 7 et 8, **caractérisé en ce que** lesdits moyens de guidage coopèrent d'une façon opérationnelle avec au moins un bord (13a) d'au moins une mâchoire (13).

11. Système de table de travail selon au moins l'une quelconque des revendications précédentes, comprenant en outre des moyens de support d'outil (15; 22) pour supporter l'outil, **caractérisé en ce que** lesdits moyens de fixation sont adaptés pour réaliser le guidage du déplacement desdits moyens de support d'outil (15; 22).

12. Système de table de travail selon la revendication 11, **caractérisé en ce que** lesdits moyens de support (15; 22) comprennent un montant coulissant (17; 25) pour porter l'outil, ledit montant coulissant étant mobile selon un certain angle, de préférence un angle droit, par rapport à la direction du guidage réalisé par lesdits moyens de fixation.

13. Système de table de travail selon la revendication 12, **caractérisé par** des moyens d'arrêt (27) servant à limiter la course du montant coulissant (25).

14. Système de table de travail selon la revendication 7, ainsi que la revendication 11, **caractérisé en ce que** lesdits moyens de support comprennent une plaque (38) pour monter un outil, ladite plaque présentant au moins un bord pouvant coopérer d'une façon opérationnelle avec au moins un bord (13a) d'au moins une mâchoire (13).

15. Système de table de travail selon la revendication 14, **caractérisé en ce que** ladite plaque (38) est adaptée de manière à être maintenue d'une façon coulissante entre deux mâchoires (13).

16. Système de table de travail selon au moins l'une quelconque des revendications précédentes, comprenant en outre des moyens d'alignement (50, 52) pour aligner la pièce à usiner (W) par rapport auxdits moyens de fixation, **caractérisé en ce que** lesdits moyens d'alignement (50, 52) sont adaptés de manière à aligner la pièce à usiner dans une ligne essentiellement perpendiculaire à l'étendue de la mâchoire.

17. Système de table de travail selon au moins l'une quelconque des revendications précédentes, dans lequel lesdits moyens de fixation comprennent au moins deux mâchoires (13), **caractérisé par** des moyens de support et d'alignement (50) prévus entre les mâchoires (13) pour supporter et aligner une pièce à usiner (W) en un ou plusieurs point(s) situé(s) le long de la ligne d'usinage de l'outil.

18. Système de table de travail selon la revendication 17, **caractérisé en ce que** lesdits moyens de support et d'alignement (50) sont réglables d'un côté à l'autre et/ou dans une direction verticale.

19. Système de table de travail selon au moins l'une quelconque des revendications précédentes, **caractérisé par** des moyens de guidage de lame (54) à positionner en dessous de la pièce à usiner (W) pour guider une lame (56) d'une scie sauteuse.

20. Système de table de travail selon au moins l'une quelconque des revendications précédentes, **caractérisé par** des moyens de maintien (29) à attacher auxdits moyens de fixation pour maintenir la pièce à usiner (W) à une hauteur réglable.

21. Système de table de travail selon au moins l'une quelconque des revendications précédentes, **caractérisé en ce que** lesdits moyens de fixation sont adaptés de manière à permettre le déplacement de la pièce à usiner par rapport auxdits moyens de fixation.

22. Système de table de travail selon la revendication 21, **caractérisé par** des arrêts servant à limiter la course de la pièce à usiner.

23. Système de table de travail selon au moins l'une quelconque des revendications précédentes, **caractérisé par** un dispositif pour supporter un outil, en particulier un outil électrique, comprenant une base pour engager d'une façon coulissante lesdits moyens de fixation (13) de manière à réaliser un déplacement directionnel par rapport au système de table de travail.

24. Système de table de travail selon la revendication 23, ledit dispositif comprenant en outre un montant coulissant pour porter l'outil, ledit montant coulissant étant mobile selon un certain angle, de préférence un angle droit, par rapport à la direction du déplacement de la base coulissante.

25. Système de table de travail selon la revendication 24, dans lequel ledit dispositif comprend en outre un moyen d'arrêt servant à limiter la course du montant coulissant.
